# FASCICULE DE BREVET EUROPEEN

(11) **EP 4 312 522 B1**
(45) Date de publication et mention de la délivrance du brevet: **16.04.2025**
(21) Numéro de dépôt: 22712420.3
(22) Date de dépôt: 14.03.2022
(51) Int. Cl.: A01K 1/01

(54) **ENSEMBLE MODULAIRE DE SOUBASSEMENT D'UN BÂTIMENT D'ÉLEVAGE, SOUBASSEMENT ET BÂTIMENT CORRESPONDANTS, ET PROCÉDÉ DE CONSTRUCTION D'UN BÂTIMENT QUI EN FAIT USAGE**
MODULARE BODENANORDNUNG FÜR EIN TIERZUCHTGEBÄUDE, ENTSPRECHENDER BODEN UND GEBÄUDE UND VERFAHREN ZUR ERRICHTUNG EINES GEBÄUDES DAMIT
MODULAR FLOOR ASSEMBLY FOR AN ANIMAL-REARING BUILDING, CORRESPONDING FLOOR AND BUILDING, AND METHOD FOR ERECTING A BUILDING THAT EMPLOYS SAME

(30) Priorité: 31.03.2021 FR 2103347
(43) Date de publication de la demande: 07.02.2024
(73) Titulaire: Socobati, 22400 Lamballe Armor (FR)
(72) Inventeur: LE GUILLOUX, Pierre, 22400 LAMBALLE (FR); PREVOST, Pascal, 22120 HILLION (FR); MORVEZEN, Maëlle, 22550 PLEBOULLE (FR); DOMAIN, Cédric, 22400 LAMBALLE ARMOR (FR)
(74) Mandataire: Regimbeau
(86) Numéro de dépôt international: PCT/EP2022/056456
(87) Numéro de publication internationale: WO 2022/207286

(56) Documents cités:
- EP-A1- 2 494 864
- DD-A1- 203 217
- FR-A1- 2 848 065
- US-A1- 2016 316 712

## Description

### DOMAINE TECHNIQUE GENERAL

La présente invention se situe dans le domaine des bâtiments d'élevage d'animaux, notamment de porcs.

### ETAT DE LA TECHNIQUE

On décrit dans le document FR 2959639 une installation d'élevage d'animaux, notamment de porcs, qui comprend une fosse pourvue d'un fond de collecte et de récupération des déjections de ces animaux, disposée au-dessous d'un plancher ajouré formant une surface de déplacement pour ceux-ci. Le fond présente, en coupe transversale, au moins deux surfaces planes et en pente formant ensemble un "V", ces deux surfaces recevant les déjections. La partie liquide de celles-ci, en l'occurrence l'urine, s'écoule par gravité dans la zone de raccordement desdites surfaces.

Un racleur des déjections circule le long de ce fond, guidé par un câble. Ses lames de raclage sont disposées parallèlement à la pente des surfaces en regard. Une description d'un racleur utilisable en combinaison avec l'installation précitée est décrite par exemple dans le FR 2959640.

Par ailleurs, FR 3042096 se rapporte à une installation du même type.

Cette installation a la particularité de présenter des fosses disposées face à face, qui communiquent avec un corridor en creux qui les sépare, ce corridor transversal étant ainsi conformé qu'il constitue un espace de réception des déjections provenant desdites fosses. De plus, un chariot mobile et automoteur est conformé pour se déplacer à l'intérieur dudit corridor et collecter les déjections.

Ces installations donnent satisfaction.

Toutefois, on a constaté qu'un raclage sur une distance trop importante n'est pas opéré correctement, de sorte que la longueur de la salle d'élevage ainsi équipée est limitée en pratique.

De plus, cette technique nécessite de mettre en œuvre des opérations de terrassement importantes, en vue de la mise en place des fosses notamment.

On note aussi que ces solutions existantes ne permettent pas une extension aisée d'un bâtiment préalablement construit et ne s'adapte pas à tout type d'élevage.

Par ailleurs, cela engendre l'utilisation d'équipements mécaniques en nombre important (moteur, poulies, câble, racleur) qui engendre un entretien important, et des problèmes d'usure inévitable.

Enfin, cette technique antérieure implique la réalisation de fumières enterrées. Il en ressort des désagréments relatifs à l'eau. La fumière censée stocker la partie solide des déjections récupère aussi de l'eau « parasite » (provenant d'une nappe, de la pluie, ou d'un ruissellement) ce qui dégrade la qualité de siccité du produit solide (ce taux étant important pour l'usage qu'il est fait du produit).

Les documents EP 2494864, DD 203217, FR 2848065 et US 2016/316712 sont des illustrations de l'arrière-plan technologique dans ce domaine.

La présente invention a pour but de remédier, en tout ou partie, aux difficultés exposées plus haut.

### PRESENTATION DE L'INVENTION

Ainsi, un premier aspect de l'invention est relatif à un ensemble modulaire de soubassement d'un bâtiment d'élevage d'animaux, notamment de porcs, conformément à la revendication 1, soubassement destiné à la collecte et à l'évacuation des déjections liquides et solides desdits animaux, qui comprend :
- une première pièce formant « caniveau » d'évacuation desdites déjections liquides, qui, vue de dessus, a la forme d'un « U », dont la partie centrale et transversale comporte une face supérieure dont au moins une partie est conformée en creux, cette partie centrale étant bordée de deux ailes horizontales, parallèles et longitudinales ;
- une deuxième pièce formant « collecteur » des déjections solides, qui a une section en forme générale de « U » et qui comprend un fond horizontal et deux ailes parallèles et verticales ;
- une troisième pièce formant « fond de fosse de collecte » desdites déjections, ;
et est caractérisé en ce que :
- la hauteur des ailes de ladite deuxième pièce formant collecteur étant supérieure à la hauteur des ailes de la dite première pièce ;
- ladite troisième pièce présente une section en forme de « U », dont le fond est plan et pourvu d'une nervure centrale et longitudinale qui fait saillie sur sa face supérieure, et présente deux ailes parallèles et longitudinales, la hauteur de ces ailes croissant progressivement de l'extrémité proximale à l'extrémité distale de cette troisième pièce ;
et en ce que ladite troisième pièce est en appui d'une part, sur une aile verticale de ladite deuxième pièce de sorte que son extrémité proximale soit à l'aplomb du fond de cette deuxième pièce et d'autre part, sur les deux ailes horizontales de ladite première pièce, de sorte que son extrémité distale soit à l'aplomb de ladite partie conformée en creux et de sorte que lorsque lesdites première et troisième pièces sont posées sur un support plan et horizontal, le fond plan de ladite troisième pièce présente une pente descendante en direction de ladite première pièce.

Grâce à ces caractéristiques, les pièces qui sont avantageusement préfabriquées, sont conçues pour s'imbriquer les unes avec les autres afin de se supporter mutuellement. Leur montage ne nécessite pas de clavetage mécanique en béton armé, de sorte que la construction du bâtiment qui en est équipée est notablement facilitée et accélérée.

Par ailleurs, des ensembles modulaires de telles pièces préfabriquées se positionnent dans le sens de la largeur du bâtiment, ce qui évite de grandes distances de raclage.

Ce positionnement en largeur permet également l'extension des bâtiments, sans problème de pente ou de fil d'eau. On entend par « fil d'eau », la génératrice inférieure d'une canalisation. L'altimétrie de celle-ci est définie sur les plans des réseaux d'évacuation des liquides pour assurer une pente continue et régulière des réseaux gravitaires.

Selon d'autres caractéristiques de cet ensemble modulaire :
- la valeur de ladite pente est de l'ordre de 5% ;
- lesdites ailes parallèles et longitudinales de ladite troisième pièce s'étendent au-delà de l'extrémité distale et forment ainsi des prolongements, lesquels s'appuient sur les ailes de la première pièce ;
- la partie conformée en creux de ladite première pièce se prolonge par un conduit qui débouche sur l'une des faces avant et arrière de ladite partie centrale ;
- ledit conduit débouche sur la face avant de ladite première pièce, c'est-à-dire celle qui est située entre lesdites ailes ;
- ledit conduit débouche sur la face arrière de ladite première pièce, c'est-à-dire celle qui est située à l'opposé desdites ailes ;
- il comprend une première et une troisième pièces supplémentaires identiques aux précédentes et lesdites premières et troisièmes pièces sont disposées symétriquement de part et d'autre de la deuxième pièce.

Un deuxième aspect de l'invention se rapporte à un soubassement de bâtiment d'élevage d'animaux, notamment de porcs, conformément à la revendication 8, caractérisé par le fait qu'il est équipé d'au moins un ensemble modulaire selon l'une des caractéristiques précédentes.

Encore un autre aspect de l'invention se rapporte à un procédé de construction d'un bâtiment d'élevage, conformément à la revendication 10, caractérisé par le fait qu'il comporte au moins les étapes qui consistent à :
- procéder à la mise en place d'une semelle en béton sur un sol plan et horizontal ;
- positionner au moins un ensemble tel que décrit plus haut sur ladite semelle.

Avantageusement, ladite semelle est formée de trois bandes distinctes et parallèles, à savoir une bande centrale et deux bandes externes, et l'on positionne lesdites premières pièces en appui sur lesdites bandes externes, tandis que l'on positionne ladite deuxième pièce sur la bande centrale.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, des modes de réalisation possibles.

Sur ces dessins :
La figure 1 est une vue en perspective d'exemple de pièces qui, une fois assemblées, constituent un ensemble modulaire selon la présente invention ;
La figure 2 est une vue de côté de l'ensemble de la figure 1, après assemblage de ses éléments ;
La figure 3 est une vue analogue à la figure 2, les éléments étant représentés en perspective ;
La figure 4A est une vue en perspective d'une première pièce formant « caniveau » de l'ensemble de la figure 1 ;
La figure 4B est une vue analogue à la figure 4, d'une variante de réalisation de cette pièce ;
La figure 5 est une vue en perspective d'une série de pièces formant collecteur de déjections solides, constitutives dudit ensemble ;
La figure 6 est une vue en perspective d'une variante de réalisation des pièces de la figure 5 ;
La figure 7 est une vue en perspective de poutres destinées à coopérer avec l'ensemble de la figure 1 ;
La figure 8 est une vue en perspective de déflecteurs configurés pour être utilisés dans le cadre de la construction d'un bâtiment qui intègre des ensembles tels que ceux de la figure 1 ;
La figure 9 est une vue en perspective d'une dalle de couloir pourvue d'une ouverture, configurée pour être utilisée dans le cadre de la construction d'un bâtiment qui intègre des ensembles tels que ceux de la figure 1 ;
La figure 10 est une vue en perspective d'une autre dalle de couloir dépourvue d'une ouverture, configurée pour être utilisée dans le cadre de la construction d'un bâtiment qui intègre des ensembles tels que ceux de la figure 1 ;
La figure 11 est une vue en perspective d'une longrine configurée pour être utilisée dans le cadre de la construction d'un bâtiment qui intègre des ensembles tels que ceux de la figure 1 ;
La figure 12 est une vue en perspective d'une plaque de gisoir configurée pour être utilisée dans le cadre de la construction d'un bâtiment qui intègre des ensembles tels que ceux de la figure 1 ;
La figure 13 est une vue en perspective de trois bandes filantes parallèles et en béton, sur lesquelles des ensembles selon l'invention sont destinées à venir s'appuyer, étant entendu que cette figure montre également l'implantation de canalisations destinées à permettre l'évacuation des déjections liquides ;
La figure 14 est une vue en perspective d'une étape de construction d'un bâtiment d'élevage dont le soubassement incorpore des ensembles modulaires tels que ceux de la figure 1 ;
La figure 15 est une vue en perspective d'une étape de construction d'un bâtiment d'élevage dont le soubassement incorpore des ensembles modulaires tels que ceux de la figure 1 ;
La figure 16 est une vue en perspective d'une étape de construction d'un bâtiment d'élevage dont le soubassement incorpore des ensembles modulaires tels que ceux de la figure 1 ;
La figure 17 est une vue en perspective d'une étape de construction d'un bâtiment d'élevage dont le soubassement incorpore des ensembles modulaires tels que ceux de la figure 1 ;
La figure 18 est une vue en perspective d'une étape de construction d'un bâtiment d'élevage dont le soubassement incorpore des ensembles modulaires tels que ceux de la figure 1 ;
La figure 19 est une vue en perspective d'une étape de construction d'un bâtiment d'élevage dont le soubassement incorpore des ensembles modulaires tels que ceux de la figure 1 ;
La figure 20 est une vue en perspective d'une étape de construction d'un bâtiment d'élevage dont le soubassement incorpore des ensembles modulaires tels que ceux de la figure 1 ;
La figure 21 est une vue en perspective d'une étape de construction d'un bâtiment d'élevage dont le soubassement incorpore des ensembles modulaires tels que ceux de la figure 1 ;
La figure 22 est une vue en perspective d'une étape de construction d'un bâtiment d'élevage dont le soubassement incorpore des ensembles modulaires tels que ceux de la figure 1 ;
La figure 23 est une vue de côté d'un bâtiment d'élevage, en cours de construction, dont le soubassement incorpore des ensembles modulaires tels que ceux de la figure 1.

### DESCRIPTION DETAILLEE DE L'INVENTION

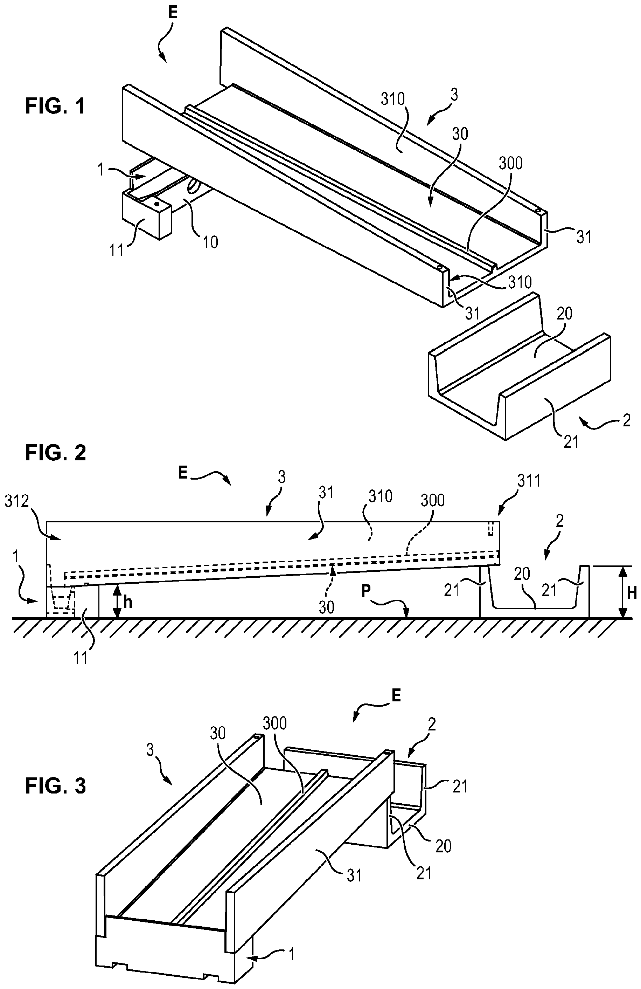

Un premier aspect de l'invention se rapporte à un ensemble modulaire E de soubassement d'un bâtiment d'élevage d'animaux. Un tel ensemble est notamment visible aux figures 1 à 3 annexées.

Sur ces figures, il est supposé reposer sur un support plan P tel que le sol.

Cet ensemble E est remarquable en ce qu'il est constitué de trois pièces 1, 2 et 3 qui seront décrites ci-après individuellement, dans un premier temps. Ces pièces, réalisés préférentiellement en béton, sont par exemple fabriquées en usine et sont acheminées sur le lieu où un bâtiment d'élevage doit être construit.

La première pièce 1 de cet ensemble E est une pièce formant « caniveau » d'évacuation des déjections liquides d'animaux. Dans la suite de la description, elle sera indifféremment appelée « première pièce », « caniveau » ou « première pièce formant caniveau ».

La deuxième pièce 2 de cet ensemble E est une pièce formant « collecteur » des déjections solides des animaux. Dans la suite de la description, elle sera indifféremment appelée « deuxième pièce », « collecteur » ou « deuxième pièce formant collecteur ».

La troisième pièce 3 de cet ensemble E est une pièce formant « fond de fosse de collecte » des déjections solides des animaux. Dans la suite de la description, elle sera indifféremment appelée « troisième pièce », « fond de fosse de collecte » ou « troisième pièce formant fond de fosse de collecte ».

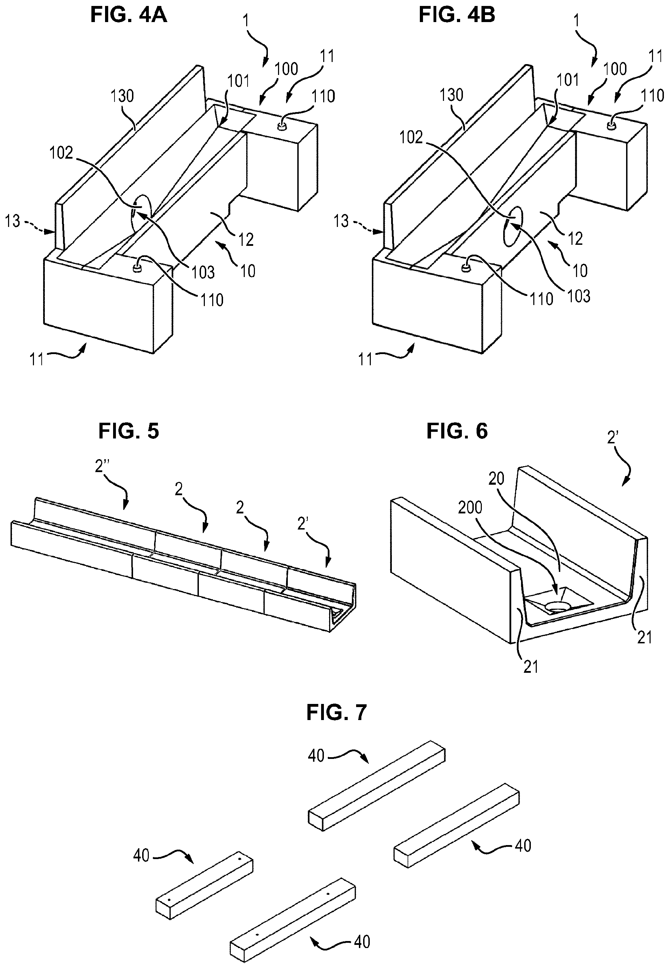

La première pièce formant caniveau 1 a la forme générale d'un « U » quand elle est vue de dessus (voir notamment les figures 4A et 4B).

Elle est formée d'une partie centrale et transversale 10 et de deux ailes latérales et longitudinales 11, ces ailes présentant la même épaisseur que la partie centrale 10.

On a référencé 12 la face avant de la partie centrale 10, c'est-à-dire la face tournée vers les ailes 11. Par ailleurs, on a référencé 13 la face arrière de la partie centrale 10, c'est-à-dire la face tournée à l'opposé des ailes 11.

La face supérieure 100 de la partie centrale 10 est conformée en creux 101 qui, dans le mode de réalisation illustré, a la forme d'une pyramide inversée. Toutefois, dans un mode de révélation différent et non illustré, cette forme creuse pourrait avoir un profil courbe.

Le point le plus bas de cette partie en creux 101 communique avec une ouverture 102 qui, dans le mode de réalisation de la figure 4A, est formée dans la face arrière 13 pour constituer un conduit 103 débouchant vers l'extérieur.

Dans la variante de la figure 4B, ladite ouverture 102 est formée dans la face avant 12, pour constituer également un conduit 103 débouchant vers l'extérieur, entre les ailes 11.

Avantageusement, la face supérieure 100 de la partie centrale 10 comporte un panneau vertical 130 qui s'étend dans le prolongement de la face arrière 13, en bordure du creux 101. Il présente transversalement une largeur légèrement inférieure à celle de la pièce 1, de sorte qu'il subsiste de part et d'autre de ce panneau un espace libre.

Enfin, on note la présence, sur la face supérieure des ailes 11, d'un ergot 110 destiné à venir coopérer avec une réservation prévue à cet effet dans la pièce 3 décrite plus loin.

La deuxième pièce formant collecteur 2 est d'un seul tenant et présente une section transversale en forme de « U ».

Ainsi que cela est visible notamment à la figure 2, cette pièce 2 comportent un fond 20 plan et horizontal, qui se raccorde à deux ailes parallèles et verticales 21. Avantageusement, les faces en regard 210 des ailes 21 sont divergentes en direction de l'ouverture du « U ». Ainsi, l'angle formé par le fond 20 et chaque aile 21 est de l'ordre de 93°.

Cette forme particulière permet une meilleure collecte des déjections. Par ailleurs, la zone de raccordement du fond 20 avec les ailes 21 est avantageusement courbée, de manière à éviter l'accumulation de saletés dans cette zone.

Ainsi que cela est particulièrement visible à la figure 2, la hauteur H de la pièce 2 est supérieure à la hauteur h de la pièce 1.

A la figure 5 sont visibles plusieurs pièces de ce type, mises bout à bout, de manière à former ensemble un couloir collecteur (ou corridor).

En l'occurrence, on a représenté deux pièces 2 identiques à celles qui viennent d'être décrites. Est également visible sur cette figure une variante référencée 2', dans laquelle le fond 20 comporte une réservation 200 pour la connexion d'un réseau d'égoutture. On y a également représenté une autre variante référencée 2" qui est identique à la pièce 2, si ce n'est qu'elle présente une longueur supérieure à cette dernière. Dans ce mode de réalisation, la pièce 2" est deux fois plus longue que la pièce 2. Bien entendu, elle pourrait plus de deux fois plus longue.

La troisième pièce 3 de l'ensemble E qui est notamment visible aux figures 1 à 3, a une section transversale en forme de « U », avec un fond plan et horizontal 30, ainsi que deux ailes verticales 31.

Avantageusement, les faces en regard 310 des ailes 31 sont divergentes en direction de l'ouverture du « U ». Ainsi, l'angle formé par le fond 30 et chaque aile 31 est de l'ordre de 91°.

Cette forme particulière permet une meilleure collecte des déjections. Par ailleurs, la zone de raccordement du fond 30 avec les ailes 31 est avantageusement courbée, de manière à éviter l'accumulation de saletés dans cette zone.

En saillie du fond 30 et à mi-distance des ailes 31 s'étend une nervure centrale et longitudinale 310 qui est destinée à servir de moyen de guidage à un organe non représenté de raclage des déjections. Un tel organe est par exemple l'un de ceux qui est décrit dans les documents commentés dans l'introduction de la présente description. Il s'agit préférentiellement du racleur décrit dans le document FR 3042096.

En se reportant à la figure 2, on constate que la hauteur des ailes 31 va en croissant progressivement d'une extrémité proximale 311 située sur la droite de la figure 2 en direction d'une extrémité distale 312 située sur la gauche de la figure 2.

Ainsi, à titre d'exemple, la différence de hauteur entre ces deux extrémités est de l'ordre de 250 mm de sorte que lorsque l'arase supérieure des ailes 310 s'étend horizontalement, comme montré à la figure 2, le fond 30 présente une pente descendante en direction de l'extrémité distale, de l'ordre de 5%.

Selon un mode de réalisation préférentiel notamment visible à la figure 1, les extrémités distales 312 des ailes 31 constituent des prolongements en ce sens qu'elles s'étendent au-delà du fond 30.

Les trois pièces de l'ensemble E qui vienne d'être décrites sont destinées à coopérer ensemble de la manière illustrée notamment aux figures 2 et 3.

Plus précisément, la troisième pièce 3 prend appui sur l'une des ailes verticales 21 de la deuxième pièce 2, de sorte que son extrémité proximale 311 soit à l'aplomb du fond 20.

Par ailleurs, cette troisième pièce 3 prend également appui sur les deux ailes 11 de la première pièce 1, de sorte que l'extrémité distale de son fond 30 soit à l'aplomb de la partie en creux 101. On notera que les extrémités distales 312 des ailes 31 de la pièce 3 viennent en appui sur les ailes 11 de la pièce 1, de part et d'autre du panneau 130, de manière à être calée efficacement.

Lorsque les pièces sont ainsi positionnées, le fond 30 de la pièce 3 présente une pente descendante en direction de la première pièce 1.

On comprend aisément que lorsque des déjections animales liquides et solides tombent dans le fond de la pièce 3, la partie liquide de ceux-ci s'écoule naturellement par gravité en direction de la pièce 1 où elle est recueillie dans sa partie centrale 10 conformée en creux 101. On expliquera plus loin comment ces déjections liquides sont évacuées vers l'extérieur.

Quant aux déjections solides, celle-ci peuvent être collectées par l'organe de raclage précité et déplacées en direction de la pièce 2 dans lequel prend place un réceptacle mobile et automoteur non représenté qui est conformé pour se mouvoir et se positionner en vis-à-vis de l'extrémité proximale de la pièce 3 et recevoir les déjections raclées.

De manière particulièrement avantageuse, l'ensemble E selon l'invention comprend une première pièce 1 additionnelle, ainsi qu'une troisième pièce 3 additionnelle, chacune de ces pièces additionnelles étant respectivement identique à celles qui viennent d'être décrites.

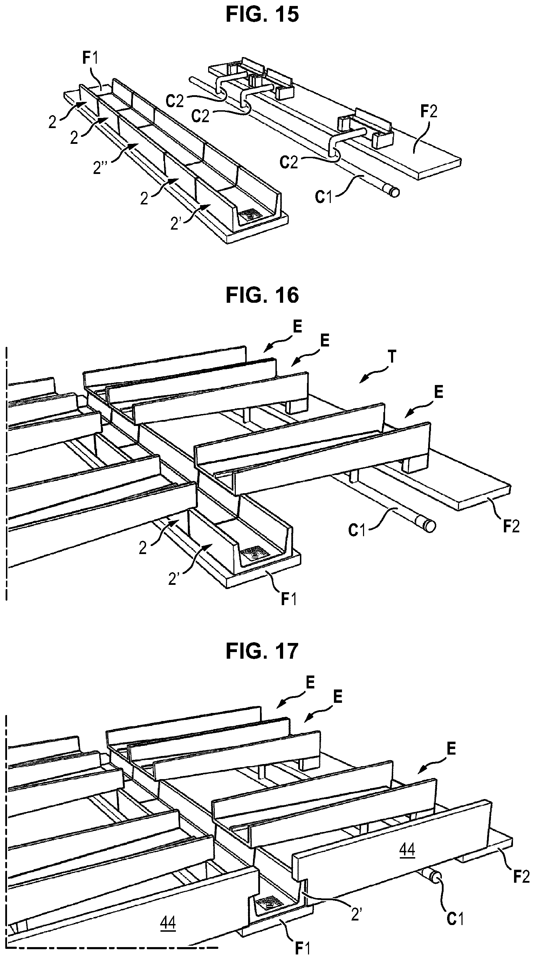

Dans une telle configuration, les deux premières pièces 1 et les deux troisièmes pièces 3 sont disposées symétriquement de part et d'autre de la deuxième pièce 2, ainsi que le montrent la figure 16 et les figures suivantes.

En faisant usage de plusieurs ensembles E tels que ceux décrits plus haut, on peut former un soubassement T de bâtiment d'élevage, tel qu'illustré à la figure 16.

On décrit ci-après un certain nombre d'éléments complémentaires susceptibles de coopérer avec des ensembles E pour constituer un soubassement T, en vue de la construction d'un bâtiment d'élevage B.

Ainsi, sont visibles à la figure 7, des poutres 40 de trois dimensions différentes qui sont destinées à être posées entre les extrémités en regard de deux pièces 3 disposées face à face, afin de supporter des dalles constitutives d'un couloir. Certaines de ces poutres peuvent être positionnées sur le dessus des pièces 3 pour adapter leur altimétrie avant la pose des caillebotis de la salle d'élevage.

Avantageusement, ces poutres sont prépercées afin de pouvoir, le cas échéant, réaliser un scellement chimique avec la pièce 3 associée et ainsi assurer une parfaite stabilité.

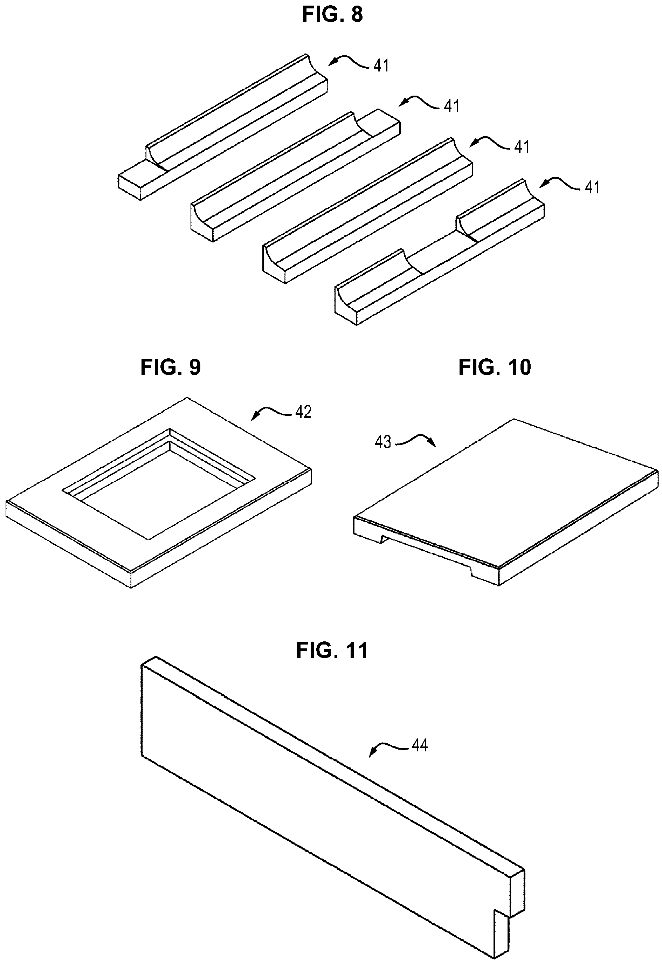

A la figure 8, on a affaire à des déflecteurs 41 qui sont des éléments destinés à être posés sur les pièces 3, en fond de case, en alignement avec des caillebotis et à l'aplomb des pièces 1. Ces éléments permettent d'éviter que les déjections solides ne tombent dans les pièces 1 et bouchent le réseau d'évacuation des déjections liquides. Ces éléments sont déclinés selon plusieurs variantes afin de satisfaire aux différents aménagements possibles des cases d'élevage.

Aux figures 9 et 10, on a affaire à des dalles de couloir 42 et 43 qui sont destinés à reposer sur les poutres 40 de la figure 7. Elles permettent la circulation d'une personne au-dessus du soubassement T. On note que la dalle 42 comporte une trappe qui permet d'accéder à la pièce 2 qui se trouvent juste en dessous.

À la figure 11 est visible une longrine 44 qui est destinée à être positionnés entre la pièce 1 et la pièce 2. Il s'agit d'une pièce d'extrémité de salle d'élevage qui, en l'absence de pièce 3, permet de faire reposer un gisoir en bout de bâtiment.

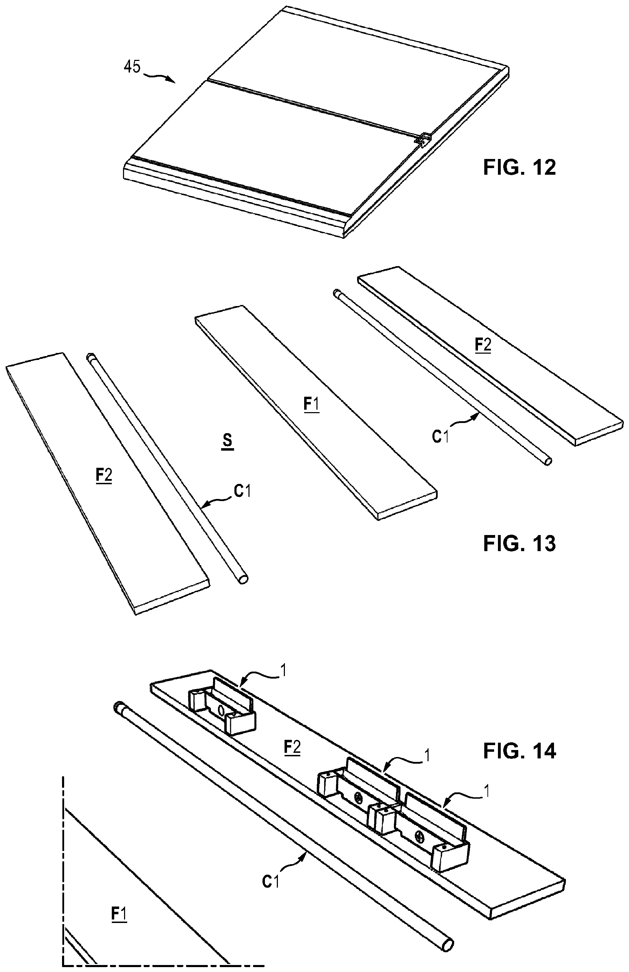

Enfin, à la figure 12 est représenté un gisoir 45. Il s'agit d'une plaque destinée à être posée entre deux pièces 3 et sur laquelle vont reposer les animaux présents dans le bâtiment d'élevage. La face supérieure de ce gisoir est légèrement en pente, de façon à permettre de ramener les déjections et/ou la paille qui y est répandue en direction des caillebotis qui recouvrent les pièces 3. Des tuyaux non représentés y sont incorporés afin de permettre le passage d'eau chaude et ainsi, de transmettre la chaleur qui s'en dégage aux animaux. La matrice de surface de cet élément est adaptée pour un meilleur confort des animaux.

Nous allons maintenant nous reporter aux figures 13 et suivantes afin de décrire d'une part comment on met en œuvre le soubassement T de l'invention, ainsi que la construction du bâtiment d'élevage B correspondant.

Préalablement à cette description, on suppose que ledit bâtiment Bva être implanté en un lieu dont le sol a été préalablement aplani.

On notera que ce sol n'a pas à être creusé pour recevoir les éléments constitutifs du bâtiment, ainsi que cela est expliqué ci-dessous.

Une étape de construction du bâtiment d'élevage consiste à procéder à la mise en place d'une semelle en béton sur un sol S plan est horizontal.

Avantageusement et comme montré à la figure 13, cette semelle est formée de trois bandes distinctes et parallèles, à savoir une bande centrale F1 et deux bandes externes F2 qui sont disposées symétriquement de part et d'autre de la bande centrale.

Bien entendu, il est envisageable de mettre en place une seule et même semelle qui englobe les bandes F1 et F2. Toutefois et comme on le comprendra à la lecture de ce qui suit, seules les pièces 1 et 2 des ensembles E reposent sur la semelle, de sorte que cette dernière peut être réduites auxdites bandes. On réalise ainsi de fortes économies de matière.

À la figure 13, on note également la présence de canalisations C1 qui sont disposées à proximité des bandes externes F2 et qui ont pour fonction de permettre l'évacuation des déjections liquides.

À la figure 14 est représentée une opération ultérieure qui consiste à disposer autant de pièces 1 qu'il est nécessaire sur les bandes F2. Ces pièces sont agencées de manière à ce que les extrémités de leurs ailes 11 viennent à fleur du bord de la bande F2 qui est en regard de la bande centrale F1.Bien entendu, on opère de même pour la seconde bande F2.

Il est alors possible de raccorder chacune des pièces 1 à la canalisation C1 précitée par une canalisation de raccordement C2 connectée au conduit 103 de chaque pièce 1 présente. Cela correspond à la situation de la figure 15.

Dans l'hypothèse où ce conduit 103 débouche à l'opposé des ailes 11 de la pièce 1, les canalisations C1 et C2 s'étendent de l'autre coté de la bande F2, c'est-à-dire à l'opposé de la bande F1.

Il est alors possible de positionner sur la bande F1 autant de pièces 2 que de paires de pièces 1. On dispose également sur la bande F1 autant de pièces 2' et 2" qu'il est nécessaire afin de former un couloir continu (corridor).

Dans une étape suivante illustrée à la figure 16, les pièces 3 sont mises en place en appui sur les pièces 1 et 2, de la manière décrite plus haut.

Bien entendu, des ensembles E selon l'invention sont mis en place autant de fois qu'il est nécessaire. Selon la configuration du bâtiment d'élevage à construire, deux ensembles E voisins peuvent être accolés ou au contraire espacés l'un de l'autre, selon un espacement qui correspond à d'une largeur de gisoir, selon le mode de construction et le type d'élevage choisis.

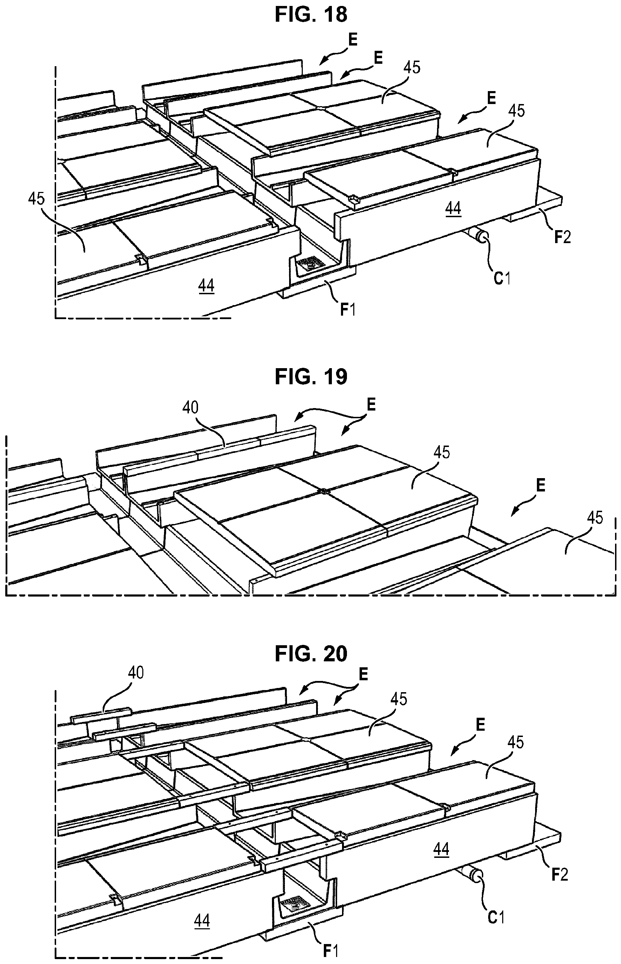

Comme illustré à la figure 17, on positionne des longrines 44 en appui d'une part sur les bandes F2 et, d'autre part, sur l'une des ailes verticales des pièces 2' et2" du couloir qui repose sur la bande F1. Ces longrines servent à supporter des dalles de gisoirs 45, ainsi que cela est représenté à la figure 18.

Ainsi que le montrent les figures 19 et 20, des poutres 40 représentées à la figure 7 sont positionnées notamment sur le sommet des ailes des pièces 3 de manière à constituer des réhausses, en vue de la mise en place ultérieure de caillebotis. Des poutres 40 sont également positionnées de manière à surplomber le couloir central.

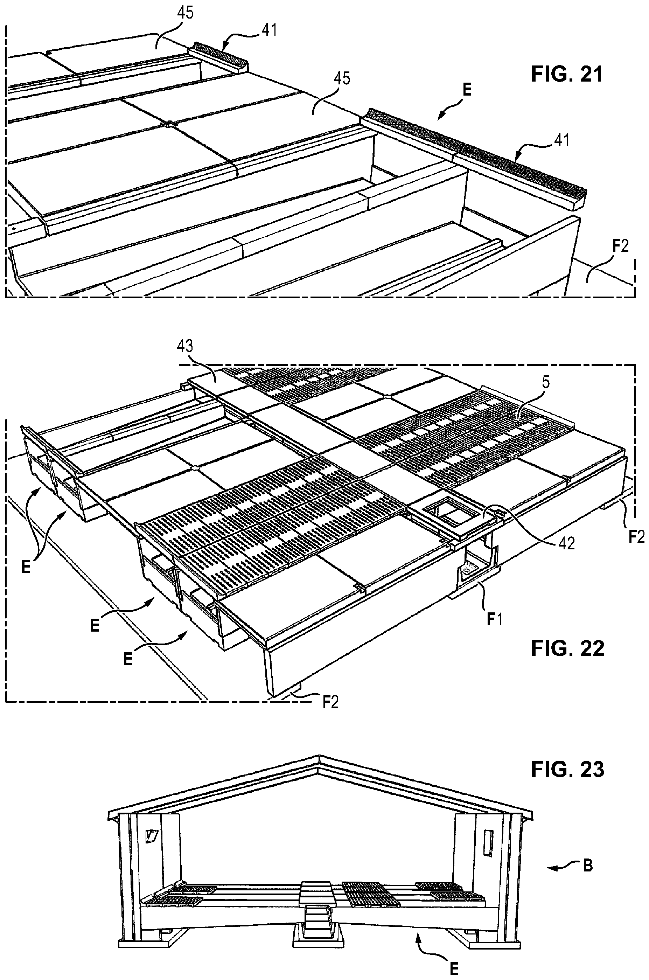

À la figure 21, on observe que des déflecteurs 41 sont positionnés transversalement au-dessus des extrémités distales des pièces 3. Ces déflecteurs servent d'appui pour des plaques de caillebotis 5, par exemple en béton, qui sont positionnées à la verticale des pièces 3. Cela correspond à la situation de la figure 22.

Enfin, des dalles de couloir 42 et 43 sont mises en place de manière à couvrir l'ensemble des pièces 2, 2' et 2".

Ensuite, un bâtiment complet d'élevage B (figure 23) peut être érigé autour de cette structure préalablement mise en place, selon des méthodes de travail habituelles.

Ci-après sont énumérés les principaux avantages que procurent l'ensemble E, ainsi que le procédé selon la présente invention.

En premier lieu, le fait de recourir aux ensembles E et aux bandes précitées permet de se dispenser de la réalisation de fondations profondes. Ainsi, aucun terrassement lourd nécessaire.

Par ailleurs, les pièces de l'ensemble E, ainsi que les éléments complémentaires constitutifs du soubassement T peuvent être des structures préfabriquées, de sorte que leur montage est plus court que dans des constructions traditionnelles, ce qui permet de réduire les délais de construction ainsi que les coûts correspondants.

À titre indicatif, les pièces 3 permet de réaliser des zones de raclage de 5 m de long, pour 1,70 m de large.

Il est bien entendu possible d'implanter plusieurs ensembles E dans un même bâtiment selon des configurations différentes, ce qui permet de s'adapter au mieux aux souhaits de l'exploitant du bâtiment d'élevage.

La modularité et l'adaptabilité de la solution selon l'invention permet de s'adapter aux normes évolutives des élevages et aux attentes sociétales (par exemple la taille des cases, la présence de gisoirs chauffants, le paillage, l'alimentation sèche ou en soupe, etc.).

## Revendications

1. Ensemble modulaire (E) de soubassement (T) d'un bâtiment d'élevage (B) d'animaux, notamment de porcs, soubassement destiné à la collecte et à l'évacuation des déjections liquides et solides desdits animaux, qui comprend :
- une première pièce (1) formant « caniveau » d'évacuation desdites déjections liquides, qui, vue de dessus, a la forme d'un « U », dont la partie centrale et transversale (10) comporte une face supérieure (100) dont au moins une partie est conformée en creux (101), cette partie centrale (10) étant bordée de deux ailes (11) horizontales, parallèles et longitudinales ;
- une deuxième pièce (2) formant « collecteur » des déjections solides, qui a une section en forme générale de « U » et qui comprend un fond horizontal (20) et deux ailes (21) parallèles et verticales,
- une troisième pièce (3) formant « fond de fosse de collecte » desdites déjections, **caractérisé par le fait que** :
- la hauteur (H) des ailes (21) de ladite deuxième pièce (2) formant collecteur est supérieure à la hauteur (h) des ailes de la dite première pièce (1) ;
- ladite troisième pièce (3) présente une section en forme de « U », dont le fond (30) est plan et pourvu d'une nervure centrale et longitudinale (300) qui fait saillie sur sa face supérieure, et présente deux ailes parallèles et longitudinales (31), la hauteur de ces ailes croissant progressivement de l'extrémité proximale (311) à l'extrémité distale (312) de cette troisième pièce (3) ;
- ladite troisième pièce (3) est en appui d'une part, sur une aile verticale (21) de ladite deuxième pièce (2) de sorte que son extrémité proximale (311) soit à l'aplomb du fond (20) de cette deuxième pièce (2) et d'autre part, sur les deux ailes horizontales (11) de ladite première pièce (1), de sorte que son extrémité distale (312) soit à l'aplomb de ladite partie conformée en creux (101) et de sorte que lorsque lesdites première (1) et troisième (3) pièces sont posées sur un support plan et horizontal, le fond plan (30) de ladite troisième pièce (3) présente une pente descendante en direction de ladite première pièce (1).

2. Ensemble modulaire (E) selon la revendication 1, **caractérisé par le fait que** la valeur de ladite pente est de l'ordre de 5%.

3. Ensemble modulaire (E) selon la revendication 1 ou la revendication 2, **caractérisé par le fait que** lesdites ailes parallèles et longitudinales (31) de ladite troisième (3) pièce s'étendent au-delà de l'extrémité distale (312) et forment ainsi des prolongements, lesquels s'appuient sur les ailes (11) de la première pièce (1).

4. Ensemble modulaire (E) selon l'une des revendications précédentes, **caractérisé par le fait que** la partie conformée en creux (101) de ladite première pièce (1) se prolonge par un conduit (103) qui débouche sur l'une des faces avant (12) et arrière (13) de ladite partie centrale (10).

5. Ensemble modulaire (E) selon la revendication 4, **caractérisé par le fait que** ledit conduit (103) débouche sur la face avant (12) de ladite première pièce (1), c'est-à-dire celle qui est située entre lesdites ailes (11).

6. Ensemble modulaire (E) selon la revendication 4, **caractérisé par le fait que** ledit conduit (103) débouche sur la face arrière (13) de ladite première pièce (1), c'est-à-dire celle qui est située à l'opposé desdites ailes (11).

7. Ensemble modulaire (E) selon l'une des revendications précédentes, **caractérisé par le fait qu'**il comprend une première (1) et une troisième (3) pièces supplémentaires identiques aux précédentes et que lesdites premières (1) et troisièmes (3) pièces sont disposées symétriquement de part et d'autre de la deuxième pièce (2).

8. Soubassement (T) de bâtiment d'élevage (B) d'animaux, notamment de porcs, **caractérisé par le fait qu'**il est équipé d'au moins un ensemble modulaire (E) selon l'une des revendications précédentes.

9. Bâtiment d'élevage (B) d'animaux, notamment de porcs, **caractérisé par le fait qu'**il est équipé d'un soubassement (T) selon la revendication 8.

10. Procédé de construction d'un bâtiment d'élevage (B), **caractérisé par le fait qu'**il comporte au moins les étapes qui consistent à :
- procéder à la mise en place d'une semelle en béton sur un sol (S) plan et horizontal ;
- positionner au moins un ensemble (E) selon la revendication 7 sur ladite semelle.

11. Procédé selon la revendication 10, **caractérisé par le fait que** ladite semelle est formée de trois bandes distinctes et parallèles, à savoir une bande centrale (F1) et deux bandes externes (F2), et que l'on positionne lesdites premières pièces (1) en appui sur lesdites bandes externes (F2), tandis que l'on positionne ladite deuxième pièce (2) sur la bande centrale (F1).

## Patentansprüche

1. Modulare Anordnung (E) des Unterbaus (T) eines Gebäudes zur Aufzucht (B) von Tieren, insbesondere von Schweinen, wobei der Unterbau zum Sammeln und Entsorgen von flüssigen und festen Ausscheidungen der Tiere bestimmt ist, umfassend:
- ein erstes Teil (1), das eine "Rinne" zur Entsorgung der flüssigen Ausscheidungen bildet, das von oben gesehen die Form eines "U" hat, dessen mittlerer und quer verlaufender Teil (10) eine Oberseite (100) aufweist, von der mindestens ein Teil als Vertiefung (101) ausgebildet ist, wobei dieser mittlere Teil (10) von zwei horizontalen, parallelen und längs verlaufenden Flügeln (11) begrenzt wird;
- ein zweites Teil (2), das einen "Sammler" für feste Ausscheidungen bildet, das der einen allgemein "U"-förmigen Querschnitt hat und das einen horizontalen Boden (20) sowie zwei parallele und vertikale Flügel (21) umfasst,
- ein drittes Teil (3), das den "Boden der Sammelgrube" für die Ausscheidungen bildet,
**dadurch gekennzeichnet, dass**:
- die Höhe (H) der Flügel (21) des zweiten Teils (2), das den Sammler bildet, größer ist als die Höhe (h) der Flügel des ersten Teils (1);
- das dritte Teil (3) einen Querschnitt in Form eines "U" aufweist, dessen Boden (30) eben ist und mit einer mittigen und längs verlaufenden Rippe (300) versehen ist, die auf seiner Oberseite vorsteht, und zwei parallele und längs verlaufende Flügel (31) aufweist, wobei die Höhe dieser Flügel vom proximalen Ende (311) zum distalen Ende (312) dieses dritten Teils (3) allmählich zunimmt;
- das dritte Teil (3) einerseits auf einem vertikalen Flügel (21) des zweiten Teils (2) derart aufliegt, dass sein proximales Ende (311) lotrecht zum Boden (20) dieses zweiten Teils (2) steht, und andererseits auf den beiden horizontalen Flügeln (11) des ersten Teils (1) derart, dass sein distales Ende (312) lotrecht zu dem als Vertiefung (101) ausgebildeten Teil ist und derart, dass, wenn das erste (1) und das dritte (3) Teil auf eine ebene und horizontale Unterlage gelegt werden, der ebene Boden (30) des dritten Teils (3) eine abfallende Neigung in Richtung des ersten Teils (1) aufweist.

2. Modulare Anordnung (E) nach Anspruch 1, **dadurch gekennzeichnet, dass** der Wert der Neigung in der Größenordnung von 5% liegt.

3. Modulare Anordnung (E) nach Anspruch 1 oder Anspruch 2, **dadurch gekennzeichnet, dass** sich die parallelen und längs verlaufenden Flügel (31) des dritten Teils (3) über das distale Ende (312) hinaus erstrecken und somit Verlängerungen bilden, die sich auf den Flügeln (11) des ersten Teils (1) abstützen.

4. Modulare Anordnung (E) nach einem der vorhergehenden Ansprüche, **dadurch gekennzeichnet, dass** sich der als Vertiefung (101) ausgebildete Teil des ersten Teils (1) mittels eines Kanals (103) verlängert, der auf einer von der Vorder- (12) und Rück- (13) Seiten des mittleren Teils (10) mündet.

5. Modulare Anordnung (E) nach Anspruch 4, **dadurch gekennzeichnet, dass** der Kanal (103) auf der Vorderseite (12) des ersten Teils (1), das heißt, auf der, die sich zwischen den Flügeln (11) befindet, mündet.

6. Modulare Anordnung (E) nach Anspruch 4, **dadurch gekennzeichnet, dass** der Kanal (103) auf der Rückseite (13) des ersten Teils (1), das heißt, auf der, die den Flügeln (11) gegenüberliegt, mündet.

7. Modulare Anordnung (E) nach einem der vorhergehenden Ansprüche, **dadurch gekennzeichnet, dass** sie ein erstes (1) und ein drittes (3) zusätzliches Teil umfasst, die mit den vorhergehenden identisch sind, und dass das erste (1) und das dritte (3) Teil symmetrisch auf beiden Seiten des zweiten Teils (2) angeordnet sind.

8. Unterbau (T) eines Gebäudes zur Aufzucht (B) von Tieren, insbesondere von Schweinen, **dadurch gekennzeichnet, dass** er mit mindestens einer modularen Anordnung (E) nach einem der vorhergehenden Ansprüche ausgestattet ist.

9. Gebäude zur Aufzucht (B) von Tieren, insbesondere von Schweinen, **dadurch gekennzeichnet, dass** es mit einem Unterbau (T) nach Anspruch 8 ausgestattet ist.

10. Verfahren zur Errichtung eines Gebäudes zur Aufzucht (B), **dadurch gekennzeichnet, dass** es mindestens die folgenden Schritte umfasst:
- Platzieren einer Betonplatte auf einem ebenen und horizontalen Boden (S);
- Positionieren mindestens einer Anordnung (E) nach Anspruch 7 auf der Platte.

11. Verfahren nach Anspruch 10, **dadurch gekennzeichnet, dass** die Platte aus drei unterschiedlichen und parallelen Bändern besteht, nämlich einem mittleren Band (F1) und zwei äußeren Bändern (F2), und dass die ersten Teile (1) derart positioniert werden, dass sie auf den äußeren Bändern (F2) aufliegen, während man das zweite Teil (2) auf dem mittleren Band (F1) positioniert.

## Claims

1. A modular assembly (E) for the basement (T) of an animal, in particular pig, breeding building (B), which basement is intended for the collection and the discharge of liquid and solid waste from said animals, which comprises:
- a first part (1) forming a "gutter" for discharging said liquid waste which, viewed from above, is "U"-shaped, the central and transverse portion (10) of which includes an upper face (100) at least part of which is shaped as a recess (101), this central portion (10) being bordered by two horizontal, parallel and longitudinal wings (11);
- a second part (2) forming a "collector" of the solid waste, which has a generally "U"-shaped section and which comprises a horizontal bottom (20) and two parallel and vertical wings (21);
- a third part (3) forming a "collection pit bottom" for collecting said waste, **characterized by** the fact that:
- the height (H) of the wings (21) of said second part (2) forming collector is greater than the height (h) of the wings of said first part (1);
- said third part (3) has a "U"-shaped section, the bottom (30) of which is flat and provided with a central and longitudinal rib (300) which protrudes on its upper face, and has two parallel and longitudinal wings (31), the height of these wings gradually increasing from the proximal end (311) to the distal end (312) of this third part (3);
- said third part (3) is bearing on the one hand, on a vertical wing (21) of said second part (2) so that its proximal end (311) is vertically above the bottom (20) of this second part (2) and on the other hand, on the two horizontal wings (11) of said first part (1), so that its distal end (312) is vertically above said recess-shaped portion (101) and so that when said first (1) and third (3) parts are laid on a flat and horizontal support, the flat bottom (30) of said third part (3) has a downward slope in the direction of said first part (1).

2. The modular assembly (E) according to claim 1, **characterized in that** the value of said slope is of the order of 5%.

3. The modular assembly (E) according to claim 1 or 2, **characterized in that** said parallel and longitudinal wings (31) of said third part (3) extend beyond the distal end (312) and thus form extensions, which bear on the wings (11) of the first part (1).

4. The modular assembly (E) according to any of the preceding claims, **characterized in that** the recess-shaped portion (101) of said first part (1) is extended by a duct (103) which opens out onto one of the front (12) and rear (13) faces of said central portion (10).

5. The modular assembly (E) according to claim 4, **characterized in that** said duct (103) opens out onto the front face (12) of said first part (1), that is to say the one located between said wings (11).

6. The modular assembly (E) according to claim 4, **characterized in that** said duct (103) opens out onto the rear face (13) of said first part (1), that is to say the one located opposite to said wings (11).

7. The modular assembly (E) according to any of the preceding claims, **characterized in that** it comprises a first (1) and a third (3) additional part identical to the previous ones and **in that** said first (1) and third (3) parts are disposed symmetrically on either side of the second part (2).

8. A basement (T) of an animal, in particular pig, breeding building (B), **characterized in that** it is equipped with at least one modular assembly (E) according to any of the preceding claims.

9. An animal, in particular pig, breeding building (B) **characterized in that** it is equipped with a basement (T) according to claim 8.

10. A method for constructing a livestock building (B), **characterized in that** it includes at least the steps which consist in:
- setting up a concrete footing on a flat and horizontal ground (S);
- positioning at least one assembly (E) according to claim 7 on said footing.

11. The method according to claim 10, **characterized in that** said footing is formed of three distinct and parallel strips, namely a central strip (F1) and two outer strips (F2), and **in that** said first parts (1) are positioned bearing on said outer strips (F2), while said second part (2) is positioned on the central strip (F1).
